(19) **Europäisches Patentamt / European Patent Office / Office européen des brevets**

(11) **EP 2 952 255 A1**

(12) **EUROPEAN PATENT APPLICATION**
published in accordance with Art. 153(4) EPC

(43) Date of publication:
**09.12.2015 Bulletin 2015/50**

(21) Application number: **13873998.2**

(22) Date of filing: **31.10.2013**

(51) Int Cl.:
**B01J 27/199** (2006.01)    **B01D 53/86** (2006.01)
**B01J 27/198** (2006.01)

(86) International application number:
**PCT/JP2013/079511**

(87) International publication number:
**WO 2014/119067 (07.08.2014 Gazette 2014/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.01.2013 JP 2013014366**

(71) Applicant: **Hitachi Zosen Corporation**
**Osaka-shi, Osaka 559-8559 (JP)**

(72) Inventors:
• **HIKAZUDANI, Susumu**
**Osaka-shi**
**Osaka 559-8559 (JP)**
• **HINO, Naoe**
**Osaka-shi**
**Osaka 559-8559 (JP)**

(74) Representative: **Peter, Julian**
**Staeger & Sperling**
**Partnerschaftsgesellschaft mbB**
**Sonnenstrasse 19**
**80331 München (DE)**

(54) **CATALYST FOR DECOMPOSING AMMONIA**

(57) [Problem] Provided is a catalyst for decomposing ammonia, which has stable ammonia decomposition performance even for exhaust gas containing SOx ($SO_2$ and $SO_3$) at a high concentration caused subsequent to the denitration catalyst system using an ammonia-based reducing agent in a purification treatment of, e.g., exhaust gas from an internal combustion engine, such as a marine diesel engine.

[Solution] A catalyst for decomposing ammonia in exhaust gas has as a catalyst base a denitration catalyst having supported thereon titanium oxide and vanadium oxide, or as a catalyst base a denitration catalyst having supported thereon titanium oxide, vanadium oxide, and tungsten oxide, and further having supported thereon zinc, calcium, and phosphorus as catalytically active components. The exhaust gas is exhaust gas containing ammonia and sulfur oxides from an internal combustion engine, such as a marine diesel engine.

EP 2 952 255 A1

**Description**

Technical Field

The present invention relates to a catalyst for decomposing ammonia, more particularly to a catalyst for decomposing ammonia, which has stable ammonia decomposition performance even for exhaust gas containing sulfur oxides (SOx) at a high concentration, for example, exhaust gas from an internal combustion engine, such as a marine diesel engine.

Background Art

Generally, an engine used in a ship or the like includes a ship propulsion engine, an auxiliary engine for generator, and a combustion furnace, and the above two engines produce a large amount of exhaust gas. As an engine, a diesel engine using a fossil fuel, especially using an A heavy oil or C heavy oil having a high sulfur content as a fuel is mainly used, and nitrogen oxides (NOx) contained in exhaust gas from the diesel engine are to be regulated.

As a method for removing nitrogen oxides in exhaust gas from an internal combustion engine, such as a marine diesel engine, as seen in the description of Patent Literature 1 and 2 below, there is a method in which an ammonia-based reducing agent is added to the exhaust gas and the resultant gas is contacted with a denitration catalyst. In this case, the denitration catalyst is placed in various positions, for example, before or after a supercharger.

A heat exchanger for recovering heat from an internal combustion engine, such as a marine diesel engine, is often placed downstream of a supercharger, and, when the heat exchanger is placed downstream of the denitration catalyst system using an ammonia-based reducing agent, there is a problem in that substances derived from the engine fuel, lubricating oil, or reducing agent are deposited in the heat exchanger to cause a blockage of the heat exchanger , making it impossible to continuously operate the denitration system.

The substances deposited in the heat exchanger include soot and calcium sulfate derived from a fuel and a lubricating oil, and, in addition to these substances, ammonium sulfate and/or ammonium hydrogensulfate is detected. Further, these deposited substances have been confirmed to be generated when an ammonia-based reducing agent is added.

For preventing the occurrence of deposition in the heat exchanger, it is necessary to suppress the formation of ammonium sulfate and ammonium hydrogensulfate. For suppressing the formation of ammonium sulfate and ammonium hydrogensulfate, a reduction of the sulfur oxides (SOx) concentration or ammonia concentration in exhaust gas is effective.

As a method for reducing the SOx ($SO_2$ and $SO_3$) concentration, there are a method in which an aqueous alkali solution is allowed to absorb SOx, and a method using a fuel having a reduced sulfur content. The former is disadvantageous in that the exhaust gas temperature is lowered, so that the heat recovery efficiency of the heat exchanger is lowered. The latter is disadvantageous in that the cost of the fuel is increased. Thus, as a method for reducing SOx, no effective method has been found to date.

On the other hand, as a technique for reducing ammonia, there is a method using an ammonia decomposing apparatus using an ammonia oxidation catalyst. The Patent Literature 3 and 4 below shows, as an ammonia oxidation catalyst, a copper (Cu)-supported catalyst, and a catalyst comprising a complex oxide of titanium (Ti) and silicon (Si) having supported thereon vanadium (V), tungsten (W), and platinum (Pt), and shows that the catalysts have an effect even with respect to SOx-containing exhaust gas. However, in the examples of the respective specifications of Patent Literature 3 and 4, there is only a description about the results of the experiments conducted under conditions such that no sulfur oxides (SOx) are present, and further there is no description about the long-term stability of the catalyst.

Prior Art Literature

Patent Literature

PTL 1: JP-A-2011-149329
PTL 2: JP-A-2012-82804
PTL 3: JP-A-7-91644
PTL 4: JP-A-7-289897

Summary of Invention

Technical Problem

Generally, an ammonia decomposing catalyst is markedly lowered in the performance due to SOx, and there has not yet been found an ammonia decomposing catalyst which can be applied to SOx-containing exhaust gas.

An object of the present invention is to solve the above-mentioned problems accompanying the conventional technique, and to provide a catalyst for decomposing ammonia, which has stable ammonia decomposition performance even for exhaust gas having a high sulfur oxides concentration, for example, exhaust gas from an internal combustion engine, such as a marine diesel engine, and particularly, to provide a catalyst for decomposing ammonia, which can suppress the formation of ammonium sulfate and/or ammonium hydrogensulfate derived from the reducing agent even when a heat exchanger for heat recovery is placed downstream of the denitration catalyst system using an ammonia-based reducing agent in a purification treatment of, e.g., exhaust gas from an internal combustion engine, such as a marine diesel engine, so that these substances can be prevented from being deposited in the heat exchanger so as not to cause the blockage of the heat exchanger, thus enabling a continuous operation of the denitration system for exhaust gas.

Solution to Problem

In view of the above, the present inventors have conducted extensive and intensive studies. As a result, it has been found that, as a catalyst for decomposing ammonia contained in exhaust gas having a high sulfur oxides (SOx) concentration caused subsequent to the denitration catalyst system using an ammonia-based reducing agent in a purification treatment of, e.g., exhaust gas from an internal combustion engine, such as a marine diesel engine, by using a catalyst which comprises as a catalyst base a denitration catalyst having supported thereon titanium oxide and vanadium oxide, or titanium oxide, vanadium oxide, and tungsten oxide, and further having supported thereon zinc, calcium, and phosphorus as catalytically active components, stable ammonia decomposition performance can be exhibited even for exhaust gas containing SOx at a high concentration, and the present invention has been completed.

For achieving the above object, the invention of claim 1 is a catalyst for decomposing ammonia in exhaust gas, the catalyst being characterized by comprising as a catalyst base a denitration catalyst having supported thereon titanium oxide and vanadium oxide, and further having supported thereon zinc, calcium, and phosphorus as catalytically active components.

The invention of claim 2 is a catalyst for decomposing ammonia in exhaust gas, the catalyst being characterized by comprising as a catalyst base a denitration catalyst having supported thereon titanium oxide, vanadium oxide, and tungsten oxide, and further having supported thereon zinc, calcium, and phosphorus as catalytically active components.

The invention of claim 3 is the catalyst for decomposing ammonia according to claim 1 or 2, characterized in that the exhaust gas is exhaust gas containing ammonia and sulfur oxides from an internal combustion engine.

Advantageous Effects of Invention

By the inventions of claims 1 and 2, effects are obtained such that stable ammonia decomposition performance can be exhibited even for exhaust gas containing SOx ($SO_2$ and $SO_3$) at a high concentration caused subsequent to the denitration catalyst system using an ammonia-based reducing agent in a purification treatment of, e.g., exhaust gas from an internal combustion engine, such as a marine diesel engine, and particularly, even when a heat exchanger for heat recovery is placed downstream of the denitration catalyst system using an ammonia-based reducing agent in a purification treatment of, e.g., exhaust gas from an internal combustion engine, such as a marine diesel engine, the formation of ammonium sulfate and/or ammonium hydrogensulfate derived from the reducing agent can be suppressed, so that these substances can be prevented from being deposited in the heat exchanger so as not to cause the blockage of heat exchanger, thus enabling a continuous operation of the denitration system for exhaust gas.

Brief Description of Drawing

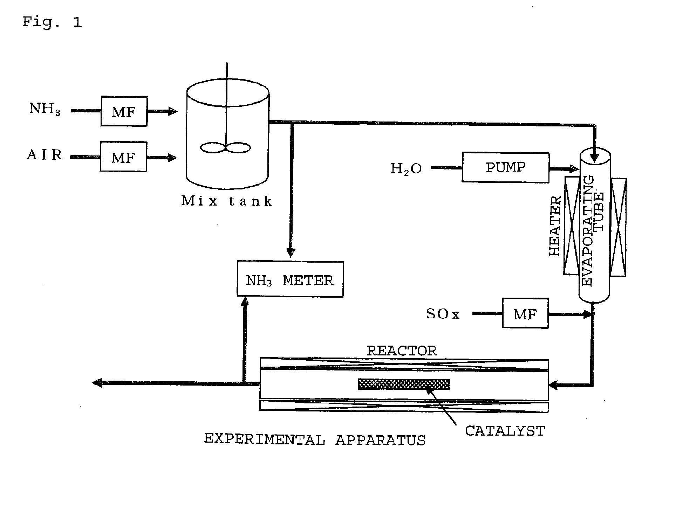

[Fig. 1] A flow sheet of an ammonia decomposition experimental apparatus for evaluating the performance of the ammonia decomposing catalyst of the invention.

Description of Embodiments

Hereinbelow, embodiments of the present invention will be described, but the present invention is not limited to these embodiments.

The invention is a catalyst for decomposing ammonia in exhaust gas containing SOx ($SO_2$ and $SO_3$) at a high concentration caused subsequent to the denitration catalyst system using an ammonia-based reducing agent in a purification treatment of, e.g., exhaust gas from an internal combustion engine, such as a marine diesel engine, wherein the catalyst is characterized by comprising as a catalyst base a denitration catalyst having supported thereon titanium oxide and vanadium oxide, and further having supported thereon zinc (Zn), calcium (Ca), and phosphorus (P) as catalytically active components.

Further, the invention is a catalyst for decomposing ammonia in the above exhaust gas, wherein the catalyst is characterized by comprising as a catalyst base a denitration catalyst having supported thereon titanium oxide, vanadium oxide, and tungsten oxide, and further having supported thereon zinc (Zn), calcium (Ca), and phosphorus (P) as catalytically active components.

In preparing a catalyst base formed from a denitration catalyst having, as effective components, titanium oxide and vanadium oxide, or titanium oxide, vanadium oxide, and tungsten oxide, as a precursor of vanadium, an ammonium metavandate (hereinafter, referred to as "AMV") powder is preferably used. The ammonium metavanadate powder preferably contains particles having a particle diameter of 10 $\mu$m or less at a cumulative content of 20% or more, preferably 25% or more. It is considered that, by using an AMV powder having a smaller particle diameter, the size of the ammonium metavanadate powder particles adsorbed by titania is reduced to improve the dispersibility, so that the catalyst performance is improved. Further, with respect to the AMV powder having a smaller particle diameter, for example, a reclaimed product from petroleum combustion ash, such as heavy oil ash, is preferably used. This is advantageous not only in that the operation of grinding can be omitted, but also in that the cost of production of the catalyst is remarkably reduced due to the recovered and reclaimed product.

On the other hand, as a precursor of tungsten, an ammonium metatungstate (hereinafter, referred to as "AMT") powder is preferably used.

For example, a titania (titanium oxide) powder is first added to a mixture of a silica sol and water in a predetermined proportion to prepare a slurry. Then, to the prepared slurry is added an ammonium metavanadate (AMV) powder having a small particle diameter in a predetermined proportion, and the resultant mixture is stirred and then allowed to stand to permit the titania to adsorb ammonium metavanadate. Then, to the resultant slurry is added an aqueous solution of ammonium metatungstate (hereinafter, referred to as "AMT") in a predetermined proportion to prepare a slurry. In the thus prepared slurry is immersed a honeycomb structure having, for example, a corrugated sheet and a flat sheet which are alternately stacked on one another so that the honeycomb structure has supported thereon the catalyst precursor substances in the slurry, and the honeycomb structure taken out from the slurry is dried, and then calcined to prepare a corrugated/honeycomb structure-type catalyst base.

With respect to the prepared catalyst base formed from the corrugated/honeycomb structure-type denitration catalyst having supported thereon titanium oxide and vanadium oxide, or titanium oxide, vanadium oxide, and tungsten oxide, for further causing the catalyst base to have supported thereon zinc, calcium, and phosphorus as catalytically active components, for example, the following is performed.

Specifically, the catalyst base formed from the above-described denitration catalyst is immersed in an aqueous zinc nitrate [$Zn(NO_3)_2$] solution, and then taken out and dried at, for example, 110°C, and then calcined in air at 400°C to cause the catalyst base to have supported thereon zinc oxide ($ZnO_2$). Then, the resultant catalyst base is immersed in an aqueous calcium nitrate [$Ca(NO_3)_2$] solution, and then taken out and dried at, for example, 110°C, and then calcined in air at 400°C to cause the catalyst base to have supported thereon calcium oxide (CaO). Further, the resultant catalyst base is immersed in an aqueous phosphoric acid ($P_2O_5$) solution, and then taken out and dried at, for example, 110°C, and then calcined in air at 400°C to cause the catalyst base to have supported thereon phosphorus oxide ($P_2O_3$).

In the thus obtained catalyst of the invention for decomposing ammonia in exhaust gas, with respect to the amount of each catalytically active component supported, in terms of an amount for each element, based on the weight of the catalyst base formed from a denitration catalyst having supported thereon titanium oxide and vanadium oxide, or titanium oxide, vanadium oxide, and tungsten oxide, zinc (Zn) is 0.01 to 5.0% by weight, preferably 0.05 to 1.0% by weight, calcium (Ca) is 0.01 to 5.0% by weight, preferably 0.05 to 1.0% by weight, and phosphorus (P) is 0.01 to 5.0% by weight, preferably 0.05 to 1.0% by weight.

According to the catalyst of the invention for decomposing ammonia in exhaust gas, by using a catalyst comprising as a catalyst base a denitration catalyst having supported thereon titanium oxide and vanadium oxide, or titanium oxide, vanadium oxide, and tungsten oxide, and further having supported thereon zinc (Zn), calcium (Ca), and phosphorus (P) as catalytically active components, stable ammonia decomposition performance can be exhibited even for exhaust gas containing SOx ($SO_2$ and $SO_3$) at a high concentration caused subsequent to the denitration catalyst system using an ammonia-based reducing agent in a purification treatment of, e.g., exhaust gas from an internal combustion engine, such as a marine diesel engine.

Examples

Hereinbelow, the present invention will be described with reference to the following Examples and Comparative Examples, but these Examples should not be construed as limiting the scope of the invention.

(Example 1)

The catalyst of the invention for decomposing ammonia in exhaust gas was produced in accordance with the following procedure.

(1) First, as a denitration catalyst which is a catalyst base, a commercially available corrugated/honeycomb structure-type denitration catalyst having supported thereon titanium oxide, vanadium oxide, and tungsten oxide (trade name: NOXNON 700; manufactured by Hitachi Zosen Corporation) was used.
(2) The denitration catalyst as a catalyst base was immersed in an aqueous zinc nitrate $[Zn(NO_3)_2]$ solution for 10 minutes, and then taken out and dried at 110°C, and then calcined in air at 400°C to cause the catalyst base to have supported thereon zinc oxide.
(3) Then, the resultant denitration catalyst as a catalyst base was immersed in an aqueous calcium nitrate $[Ca(NO_3)_2]$ solution for 10 minutes, and then taken out and dried at 110°C, and then calcined in air at 400°C to cause the catalyst base to have supported thereon calcium oxide.
(4) Further, the resultant denitration catalyst as a catalyst base was immersed in an aqueous phosphoric acid $[H_3PO_4]$ solution for 10 minutes, and then taken out and dried at 110°C, and then calcined in air at 400°C to cause the catalyst base to have supported thereon phosphorus oxide.
(5) In the catalyst for decomposing ammonia, with respect to the amount of each catalytically active component supported on the denitration catalyst as a catalyst base, in terms of an amount for each element, based on the weight of the catalyst base formed from the denitration catalyst having supported thereon titanium oxide, vanadium oxide, and tungsten oxide, zinc (Zn) was 0.2% by weight, calcium (Ca) was 0.7% by weight, and phosphorus (P) was 0.6% by weight.

(Example 2)

The catalyst of the invention for decomposing ammonia in exhaust gas was produced in substantially the same manner as in Example 1 except that, as a denitration catalyst which is a catalyst base, a commercially available corrugated/honeycomb structure-type denitration catalyst having supported thereon titanium oxide and vanadium oxide (trade name: NOXNON 700; manufactured by Hitachi Zosen Corporation) was used.

In the catalyst for decomposing ammonia, with respect to the amount of each catalytically active component supported on the denitration catalyst as a catalyst base, in terms of an amount for each element, based on the weight of the catalyst base formed from the denitration catalyst having supported thereon titanium oxide and vanadium oxide, zinc (Zn) was 0.22% by weight, calcium (Ca) was 0.78% by weight, and phosphorus (P) was 0.67% by weight.

(Test for performance)

For evaluating performance of the catalyst of the invention for decomposing ammonia in exhaust gas produced in Examples 1 and 2, using an experimental apparatus shown in Fig. 1, the test described below was performed ("MF" shown in Fig. 1 means mass flow controller).

With respect to exhaust gas, synthetic gas containing oxygen $(O_2)$ in an amount of 13.8 [vol%-dry], water $(H_2O)$ in an amount of 4.95 [vol%-wet], nitrogen oxides (NOx) in an amount of 1,020 [ppmvd], ammonia $(NH_3)$ in an amount of 850 [ppmvd], and sulfur oxides (SOx) in an amount of 600 [ppmvd] as shown in Table 1 below was supplied as exhaust gas at a temperature of 370 [°C] to perform an ammonia decomposition treatment step.

[Table 1]

| Type of gas | Amount | Unit |
|---|---|---|
| NOx | 1,020 | ppmvd |
| SOx | 600 | ppmvd |
| $NH_3$ | 850 | ppmvd |
| $O_2$ | 13.8 | vol%-dry |

(continued)

| Type of gas | Amount | Unit |
|---|---|---|
| $H_2O$ | 4.95 | Vol%-wet |
| Gas temperature: 370°C | | |

Then, the ammonia decomposing reactor in the experimental apparatus shown in Fig. 1 was filled with each of the catalysts of the invention for decomposing ammonia in exhaust gas, which were prepared in Examples 1 and 2.

Further, for comparison, in Comparative Example 1, the reactor was filled with a commercially available corrugated/honeycomb structure-type denitration catalyst comprising titanium oxide having supported thereon vanadium oxide and tungsten oxide (trade name: NOXNON 700; manufactured by Hitachi Zosen Corporation), and, in Comparative Example 2, the reactor was filled with a catalyst for decomposing ammonia consisting of a commercially available platinum-supported aluminum oxide (trade name: DASH 20M; manufactured by N.E. CHEMCAT Corporation).

As shown in Table 2 below, in the ammonia decomposing reactor in the experimental apparatus, the areal velocity was 50 (m/h) and the reaction temperature was 420°C.

The areal velocity is a treated gas amount per gas contact area of a honeycomb-type catalyst, and represented by the following formula.

$$\text{Areal velocity} = \text{Treated gas amount } (Nm^3/h)/\text{Gas contact area } (m^2)$$

Then, with respect to the ammonia decomposing reactor filled with each catalyst, an ammonia decomposition rate (%) before adding SOx and an ammonia decomposition rate (%) 500 hours after adding SOx were measured, and the results of the measurement were shown in Table 2 below.

[Table 2]

| | Areal velocity (m/h) | Reaction temperature (°C) | Ammonia decomposition rate (%) | |
|---|---|---|---|---|
| | | | Before adding SOx | 500 Hours after adding SOx |
| Example 1 | 50 | 420 | 40 | 40 |
| Example 2 | 50 | 420 | 42 | 42 |
| Comparative Example 1 | 50 | 420 | 0 | 0 |
| Comparative Example 2 | 50 | 420 | 95 | 10 |

As apparent from the results shown in Table 2, a comparison of Examples 1 and 2 of the invention with Comparative Example 1 has confirmed that ammonia decomposition performance can be obtained by using a catalyst having as a catalyst base a denitration catalyst having supported thereon titanium oxide, vanadium oxide, and tungsten oxide, or titanium oxide and vanadium oxide, and further having supported thereon zinc (Zn), calcium (Ca), and phosphorus (P) as catalytically active components.

Further, from a comparison of Example 1 with Comparative Example 2, it has been found that, even after adding SOx, the catalyst for decomposing ammonia in Example 1 of the invention can achieve a stable ammonia decomposition rate.

The above results have confirmed that, by the catalyst of the present invention for decomposing ammonia in exhaust gas, stable ammonia decomposition performance can be exhibited even for exhaust gas containing SOx ($SO_2$ and $SO_3$) at a high concentration caused subsequent to the denitration catalyst system using an ammonia-based reducing agent in a purification treatment of, e.g., exhaust gas from an internal combustion engine, such as a marine diesel engine, and particularly, even when a heat exchanger for heat recovery is placed downstream of the denitration catalyst system using an ammonia-based reducing agent in a purification treatment of, e.g., exhaust gas from an internal combustion engine, such as a marine diesel engine, the formation of ammonium sulfate and/or ammonium hydrogensulfate derived from the reducing agent can be suppressed, so that these substances can be prevented from being deposited in the heat exchanger so as not to cause the blockage of the heat exchanger, thus enabling a continuous operation of the denitration system for exhaust gas.

**Claims**

1. A catalyst for decomposing ammonia in exhaust gas, **characterized by** comprising as a catalyst base a denitration catalyst having supported thereon titanium oxide and vanadium oxide, and further having supported thereon zinc, calcium, and phosphorus as catalytically active components.

2. A catalyst for decomposing ammonia in exhaust gas, **characterized by** comprising as a catalyst base a denitration catalyst having supported thereon titanium oxide, vanadium oxide, and tungsten oxide, and further having supported thereon zinc, calcium, and phosphorus as catalytically active components.

3. The catalyst for decomposing ammonia according to claim 1 or 2, **characterized in that** the exhaust gas is exhaust gas containing ammonia and sulfur oxides from an internal combustion engine.

Fig. 1

EXPERIMENTAL APPARATUS

## INTERNATIONAL SEARCH REPORT

| International application No. |
| --- |
| PCT/JP2013/079511 |

**A. CLASSIFICATION OF SUBJECT MATTER**
*B01J27/199*(2006.01)i, *B01D53/86*(2006.01)i, *B01J27/198*(2006.01)i

According to International Patent Classification (IPC) or to both national classification and IPC

**B. FIELDS SEARCHED**

Minimum documentation searched (classification system followed by classification symbols)
B01J27/199, B01D53/86, B01J27/198

Documentation searched other than minimum documentation to the extent that such documents are included in the fields searched
Jitsuyo Shinan Koho          1922–1996    Jitsuyo Shinan Toroku Koho    1996–2014
Kokai Jitsuyo Shinan Koho    1971–2014    Toroku Jitsuyo Shinan Koho    1994–2014

Electronic data base consulted during the international search (name of data base and, where practicable, search terms used)
JSTPlus/JST7580(JDreamIII), Thomson Innovation

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-35208 A (Babcock-Hitachi Kabushiki Kaisha), 23 February 2012 (23.02.2012), claims 1 to 3; paragraphs [0001], [0008], [0017] (Family: none) | 1-3 |
| A | JP 2005-342710 A (Mitsubishi Chemical Engineering Corp.), 15 December 2005 (15.12.2005), claims 1, 3; paragraphs [0010] to [0012]; examples 1, 4, 5, 9 (Family: none) | 1-3 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 21 January, 2014 (21.01.14) | 04 February, 2014 (04.02.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/079511

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-94668 A  (Nippon Shokubai Co., Ltd.), 30 April 2010 (30.04.2010), entire text & US 2011/0176988 A1    & EP 2332646 A1 & WO 2010/032790 A1 | 1-3 |
| A | WO 1996/041678 A1  (Nippon Shokubai Co., Ltd.), 27 December 1996 (27.12.1996), claims 1, 3, 40 & JP 3826161 B2          & US 5877330 A & US 6281378 B1         & EP 775519 A1 | 1-3 |

Form PCT/ISA/210 (continuation of second sheet) (July 2009)

**EP 2 952 255 A1**

**INTERNATIONAL SEARCH REPORT**

| International application No. |
| --- |
| PCT/JP2013/079511 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
        The invention of claim 1 does not have novelty and a special technical feature since the invention is disclosed in the document 1, and consequently, the invention of claim 1 does not comply with the requirement of unity.
        The inventions of claims indicated below are relevant to a main invention group.
        Claims 1 and 3
        Document 1: JP 2012-35208 A  (Babcock-Hitachi Kabushiki Kaisha), 23 February 2012 (23.02.2012)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
        ☐ The additional search fees were accompanied by the applicant's protest and, where applicable, the payment of a protest fee.
        ☐ The additional search fees were accompanied by the applicant's protest but the applicable protest fee was not paid within the time limit specified in the invitation.
        ☐ No protest accompanied the payment of additional search fees.

Form PCT/ISA/210 (continuation of first sheet (2)) (July 2009)

11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011149329 A
- JP 2012082804 A
- JP 7091644 A
- JP 7289897 A